# FASCICULE DE BREVET EUROPEEN

(11) **EP 3 470 936 B1**
(45) Date de publication et mention de la délivrance du brevet: **03.06.2020**
(21) Numéro de dépôt: 17196547.8
(22) Date de dépôt: 16.10.2017
(51) Int. Cl.: G04D 3/06, C03B 33/02, G04B 39/00

(54) **PROCÉDÉ DE DÉCOUPE DE GLACE D'HORLOGERIE**
VERFAHREN ZUM SCHNEIDEN VON UHRGLAS
METHOD FOR CUTTING TIMEPIECE GLASS

(43) Date de publication de la demande: 17.04.2019
(73) Titulaire: The Swatch Group Research and Development Ltd, 2074 Marin (CH)
(72) Inventeur: BAZIN, Jean-Luc, 2512 Tüscherz-Alfermée (CH); GUNN-SECHEHAYE, Martin, 2502 Biel/Bienne (CH)
(74) Mandataire: ICB SA

(56) Documents cités:
- JP-A- S5 551 385
- JP-A- S6 270 241
- JP-A- S59 178 385
- US-A1- 2003 148 057

## Description

### Domaine de l'invention

L'invention concerne un procédé de découpe de glace d'horlogerie selon un contour dans une plaque de matériau transparent.

L'invention concerne le domaine des glaces de montres, plus particulièrement en matériau dur tel le saphir, le verre minéral, ou similaire.

### Arrière-plan de l'invention

La fabrication de pièces transparentes d'horlogerie, et en particulier des glaces, de face ou de fond, nécessite généralement des usinages recto-verso de chanfreins situés de part et d'autre d'un chant d'assemblage, qui sont importants en particulier pour faciliter le chassage, pour assurer les étanchéités, et pour l'esthétique, tel que le divulgue la demande de brevet JPS59178385 A. Cependant, la manipulation de tels composants pendant leur cycle d'usinage est malcommode, et nécessite des précautions pour éviter toute rayure liée à des bavures ou à des déchets d'usinage provenant du matériau de la glace ou/et de l'outillage utilisé pour la fabrication de cette glace, ou encore à la manipulation.

### Résumé de l'invention

L'invention se propose de mettre au point un procédé permettant de chanfreiner et découper à haute cadence des glaces, notamment des glaces circulaires, à partir de plaques de grande dimension en matériau transparent.

A cet effet, l'invention concerne un procédé selon la revendication 1.

### Description sommaire des dessins

D'autres caractéristiques et avantages de l'invention apparaîtront à la lecture de la description détaillée qui va suivre, en référence aux dessins annexés, où :
- les figures 1 à 4 représentent, de façon schématisée, et en coupe, les opérations effectuées sur une plaque de matériau transparent représentée en figure 1 avec, en trait interrompu, le profil de chaque glace à réaliser :
- la figure 2 illustre une première étape de chanfreinage d'un premier côté ;
- la figure 3 illustre une troisième étape de chanfreinage d'un deuxième côté opposé, et qui fait suite à une deuxième étape de retournement de la plaque non illustrée, et à la dépose du premier côté préalablement usiné sur un outillage ad hoc;
- la figure 4 illustre une quatrième étape de découpe et de séparation des glaces terminées ;
- les figures 5, 7 et 8 représentent, de façon schématisée, et en coupe partielle, des opérations de chanfreinage :

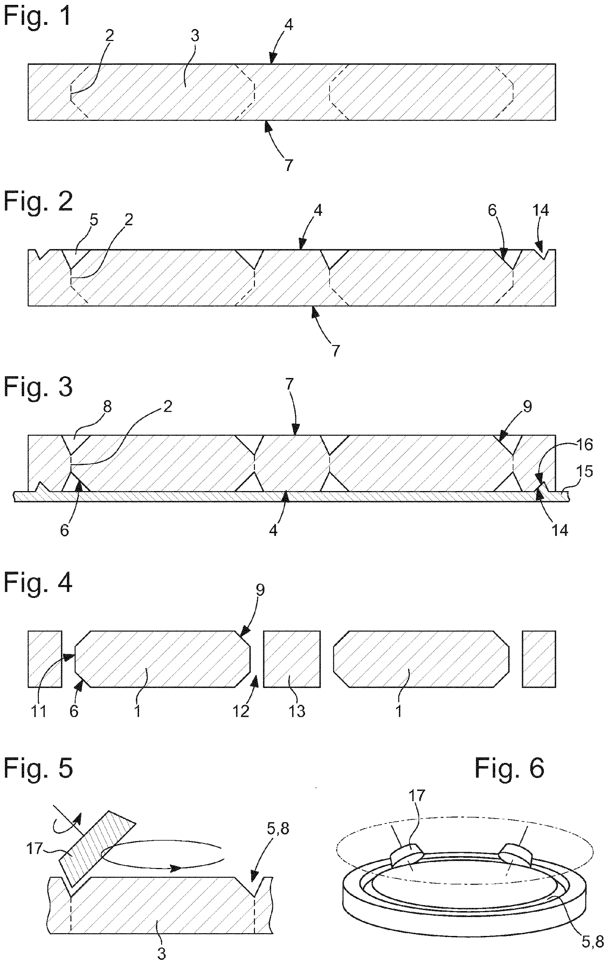

- la figure 5, avec une meule boisseau inclinée qui parcourt le contour à usiner avec l'arbre d'outil incliné en usinage quatre axes, ce parcours étant illustré par la figure 6 qui est un schéma en perspective montrant les changements d'inclinaison de cet arbre ;

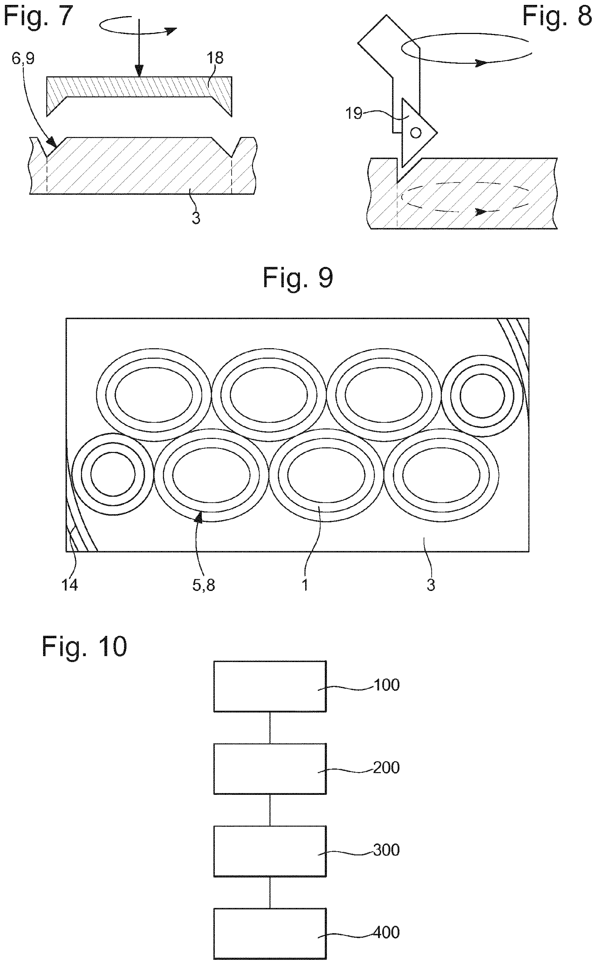

- la figure 7, pour le cas particulier d'une glace de révolution, par plongée frontale avec une meule boisseau de dimensions correspondant au profil de la glace ;
- la figure 8, avec un outil unique de type grain d'alésage, qui parcourt le contour de la glace ;
- la figure 9 représente, de façon schématisée et en vue de dessus après la première étape de chanfreinage de la figure 2, une plaque comportant les chanfreins correspondant à deux types différents de glaces, elliptique et circulaire, et comportant dans deux coins opposés des usinages de repérage pour son repositionnement sur l'outillage de la figure 3 ;
- la figure 9 est un schéma-blocs illustrant les quatre étapes essentielles du procédé selon l'invention.

### Description détaillée des modes de réalisation préférés

L'invention concerne un procédé de découpe de glace 1 d'horlogerie selon un contour 2 dans une plaque 3 de matériau transparent.

Ce matériau transparent est plus particulièrement un matériau dur tel le saphir, le verre minéral, notamment silicate, ou un matériau similaire ; il peut aussi être un polymère, dit « verre organique », ou similaire, ce matériau est adapté à la fabrication de composants d'aspect et plus particulièrement des glaces de montre ou de fond de montre.

Selon l'invention, on effectue, successivement et dans cet ordre, les étapes suivantes :
- première étape 100 : réalisation sur un premier côté 4 de la plaque 3 d'une première saignée 5 au moins du côté intérieur du contour 2, pour réaliser un premier chanfrein 6, pour chacune des glaces 1 à réaliser à partir de la plaque 3 ;
- deuxième étape 200 : retournement de la plaque 3 et repérage de la position des premiers chanfreins 6 ou/et d'au moins un usinage de repérage 14 effectué pendant la première étape 100 de réalisation des premiers chanfreins 6 ;
- troisième étape 300 : réalisation sur un deuxième côté 7 de la plaque 3, opposé au premier côté 4, d'une deuxième saignée 8 au moins du côté intérieur du contour 2, pour réaliser un deuxième chanfrein 9, en alignement avec chaque première saignée 5 et chaque premier chanfrein 6, pour chacune des glaces 1 à réaliser à partir de la plaque 3 ;
- quatrième étape 400 : séparation des glaces 1 d'un squelette 13 de la plaque 3 par usinage traversant de la plaque 3 au niveau de chaque contour 2 de chaque glace 1 pour réaliser un chant 11 de la glace 1.

Dans une mise en œuvre particulière, pendant la première étape 100 ou/et la troisième étape 300, on utilise une meule boisseau 18 ou un outil cloche de profil correspondant au chanfrein à réaliser, entraîné en rotation et effectuant une plongée frontale dans la plaque 3, si le contour 2 est de révolution.

Dans une mise en œuvre particulière, et convenant à tout contour de glace elliptique ou similaire, pendant la première étape 100 ou/et la troisième étape 300, on utilise une meule boisseau 17 ou un outil cloche entraîné en rotation et effectuant un contournage multi-axes suivant le contour 2, avec l'axe de rotation de la meule boisseau ou de l'outil cloche évoluant dans l'espace perpendiculairement au plan localement tangent au chanfrein à réaliser. Cette méthode est aussi utilisable pour réaliser des chanfreins sur des glaces carrées ou rectangulaires, mais nécessite alors de prévoir des dégagements pour l'outil autour de chaque coin, ce qui peut nécessiter un placement optimisé des glaces sur la plaque 3, pour éviter une perte de matière trop importante.

Dans une autre mise en œuvre particulière, si le matériau de la plaque 3 le permet, et notamment pour les matériaux organiques, pendant la première étape 100 ou/et la troisième étape 300, on utilise un grain d'alésage 19 monté sur une tête d'alésage entraînée en rotation et effectuant une plongée frontale dans la plaque 3, quand le contour 2 est de révolution. Dans une variante on peut également utiliser une fraise deux tailles en bout ou une fraise trois tailles.

De façon similaire, dans une autre mise en œuvre particulière en fonction du matériau de la plaque 3, pendant la première étape 100 ou/et la troisième étape 300, on utilise un grain d'alésage 19 entraîné en rotation et effectuant un contournage multi-axes suivant le contour 2, avec l'axe de rotation d'une tête d'alésage porteuse du grain d'alésage évoluant dans l'espace perpendiculairement au plan localement tangent au chanfrein à réaliser.

Naturellement, dans les variantes où on utilise un autre outil qu'une meule, notamment un grain d'alésage ou une fraise, la partie active de l'outil concernée est préférentiellement recouverte d'un dépôt, notamment d'un revêtement diamant ou similaire, tel qu'utilisé en optique ou en lunetterie.

Différentes formes d'outils ou meules sont utilisables, selon la forme du contour à chanfreiner : cloche continue, cloche discontinue, outil à une seule arête coupante tel que grain d'alésage, ou autre. La nature de l'outil dépend de celle du matériau à chanfreiner, et peut notamment et non limitativement, être choisie parmi : revêtu diamant, ou nitrure de bore, ou autre, meule diamant ou autre.

Dans une variante avantageuse, pendant la première étape 100 on réalise au moins un usinage de repérage 14, et, lors de la deuxième étape 200 de retournement, on dépose la plaque 3 sur un outillage 15 comportant au moins un relief 16 qui est agencé pour coopérer avec cet au moins un usinage de repérage 14 pour un positionnement de la plaque 3 dans une position unique, et on immobilise la plaque 3 sur cet outillage 15 par des moyens de bridage ou/et des moyens d'aspiration ou/et des moyens de fixation par le froid.

Dans une variante, pour assurer le bon positionnement de la plaque lors de son retournement, on peut mettre en œuvre un dégauchissage optique à l'aide de moyens optiques tels qu'une caméra ou similaire, ou autre. Le maintien peut être effectué de façon mécanique, ou encore par dépression.

Plus particulièrement, cet au moins un usinage de repérage 14, et cet au moins un relief 16 correspondant, comportent chacun une surface de contact conique complémentaire à celle de l'autre. Un tel usinage de repérage 14 peut notamment être localisé dans une zone perdue inutilisable pour faire des glaces, tel un coin de la plaque 3, tel que visible sur la figure 9. Il est, encore, possible d'améliorer le positionnement en usinant une pluralité de tels usinages de repérage 14, et avantageusement selon des diamètres différents pour assurer la fonction de détrompage. L'usinage de repérage 14 peut être une surface usinée avec le même outil que celui servant au chanfreinage, ou un perçage, ou autre.

Dans une mise en œuvre particulière, pendant la quatrième étape 400, on effectue la séparation des glaces 1 d'un squelette 13 par un usinage le long du contour 2 effectué par un laser ou un jet d'eau, ou par un usinage en plongée si le contour 2 est de révolution, avec une meule boisseau 18 ou un outil cloche de profil intérieur droit, entraîné en rotation et effectuant une plongée frontale dans la plaque 3. La séparation par laser convient bien, et non limitativement, au cas des glaces saphir, ou à celui des glaces en verre minéral.

Dans une mise en œuvre particulière, pendant la première étape 100 ou/et la troisième étape 300, on effectue chaque usinage de saignée avec une meule qu'on rafraîchit régulièrement sur une station d'affûtage disposée à proximité immédiate de la plaque 3.

Dans une mise en œuvre particulière, pendant la première étape 100 ou/et la troisième étape 300, on vérifie par des moyens de surveillance tels qu'une caméra ou d'autre moyens optiques, l'état de surface de chaque chanfrein après sa réalisation, et, lors d'un constat de dépassement d'un seuil de rugosité ou de transparence prédéfinie, on procède à un changement de meule ou d'outil, ou à un réaffûtage de meule ou d'outil sur une station d'affûtage disposée à proximité immédiate de la plaque 3.

De préférence le poste de production comporte des moyens de pilotage qui sont agencés pour piloter :
- ces moyens de surveillance,
- les trajets du ou des moyens de production,
- la gestion de durée de vie des meules ou/et outils, et les cadences de réaffûtage, les interruptions de cycle et les trajets pour procéder au réaffûtage, les cycles changements d'outil éventuels quand les moyens de production comportent des magasins et changeurs d'outils automatisés,
- les moyens de manutention notamment automatisés agencés pour procéder au chargement des plaques 3, à leur retournement, et à l'enlèvement des glaces 1 terminées et des squelettes résiduels 13,
- la lubrification et la filtration en cas de trajet retour de lubrifiant vers les moyens de production.

De préférence, on réalise les glaces 1 en panoplie depuis une même plaque 3. Plus particulièrement, on réalise, depuis une même plaque 3, des glaces 1 de contours 2 différents de façon à minimiser les chutes au niveau du squelette 13, tel que visible sur la figure 9 où voisinent de grandes glaces elliptiques et de petites glaces rondes.

Dans une mise en œuvre particulière, pendant la première étape 100, ou/et la troisième étape 300, ou/et la quatrième étape 400, on lubrifie avec de l'air ou/et un fluide liquide la zone de travail pour évacuer les déchets d'usinage. Toutefois cette fonction de lubrification dépend du type de meule ou d'outil utilisé, et il convient de respecter les règles d'emploi particulières, notamment pour des meules diamant ou certains outils particuliers, en fonction de leur sensibilité aux chocs thermiques, ou de la nécessité de travailler à sec, ou autre.

Dans une autre mise en œuvre particulière, là aussi dépendante de la nature des meules ou/et outils mis en œuvre, pendant la première étape 100, ou/et la troisième étape 300, ou/et la quatrième étape 400, on immerge la plaque 3 dans un fluide liquide auquel on imprime un courant pour évacuer les déchets d'usinage.

Le procédé selon l'invention permet en particulier de réaliser des glaces très fines, grâce à l'exécution des chanfreins avant découpe, par exemple une glace d'épaisseur 0,5 mm avec des chanfreins de 0,1mm qui serait impossible à réaliser par un maintien traditionnel dans une pince.

## Revendications

1. Procédé de découpe de glace (1) d'horlogerie selon un contour (2) dans une plaque (3) de matériau transparent, **caractérisé en ce qu'**on effectue, successivement et dans cet ordre, les étapes suivantes :
- première étape (100) : réalisation sur un premier côté (4) de ladite plaque (3) d'une première saignée (5) au moins du côté intérieur dudit contour (2), pour réaliser un premier chanfrein (6), pour chacune desdites glaces (1) à réaliser à partir de ladite plaque (3) ;
- deuxième étape (200) : retournement de ladite plaque (3) et repérage de la position desdits premiers chanfreins (6) ou/et d'au moins un usinage de repérage (14) effectué pendant ladite première étape (100) de réalisation desdits premiers chanfreins (6) ;
- troisième étape (300) : réalisation sur un deuxième côté (7) de ladite plaque (3), opposé audit premier côté (4), d'une deuxième saignée (8) au moins du côté intérieur dudit contour (2), pour réaliser un deuxième chanfrein (9), en alignement avec chaque dite première saignée (5) et chaque dit premier chanfrein (6), pour chacune desdites glaces (1) à réaliser à partir de ladite plaque (3) ;
- quatrième étape (400) : séparation desdites glaces (1) d'un squelette (13) de ladite plaque (3) par usinage traversant de ladite plaque (3) au niveau de chaque dit contour (2) de chaque dite glace (1) pour réaliser un chant (11) de ladite glace (1).

2. Procédé selon la revendication 1, **caractérisé en ce que**, pendant ladite première étape (100) ou/et ladite troisième étape (300), on utilise une meule boisseau (18) ou un outil cloche de profil correspondant au chanfrein à réaliser, entraîné en rotation et effectuant une plongée frontale dans ladite plaque (3), si ledit contour (2) est de révolution.

3. Procédé selon la revendication 1 ou 2, **caractérisé en ce que**, pendant ladite première étape (100) ou/et ladite troisième étape (300), on utilise une meule boisseau (17) ou un outil cloche entraîné en rotation et effectuant un contournage multi-axes suivant ledit contour (2), avec l'axe de rotation de ladite meule boisseau ou dudit outil cloche évoluant dans l'espace perpendiculairement au plan localement tangent au chanfrein à réaliser.

4. Procédé selon l'une des revendications 1 à 3, **caractérisé en ce que**, pendant ladite première étape (100) ou/et ladite troisième étape (300), on utilise un grain d'alésage (19) monté sur une tête d'alésage entraînée en rotation et effectuant une plongée frontale dans ladite plaque (3), quand ledit contour (2) est de révolution.

5. Procédé selon l'une des revendications 1 à 4, **caractérisé en ce que**, pendant ladite première étape (100) ou/et ladite troisième étape (300), on utilise un grain d'alésage (19) entraîné en rotation et effectuant un contournage multi-axes suivant ledit contour (2), avec l'axe de rotation d'une tête d'alésage porteuse dudit grain d'alésage évoluant dans l'espace perpendiculairement au plan localement tangent au chanfrein à réaliser.

6. Procédé selon l'une des revendications 1 à 5, **caractérisé en ce que**, pendant ladite première étape (100) on réalise au moins un usinage de repérage (14), et **en ce que**, lors de ladite deuxième étape (200) de retournement, on dépose ladite plaque (3) sur un outillage (15) comportant au moins un relief (16) agencé pour coopérer avec ledit au moins un usinage de repérage (14) pour un positionnement de ladite plaque (3) dans une position unique, et on immobilise ladite plaque (3) sur ledit outillage (15) par des moyens de bridage ou/et des moyens d'aspiration ou/et des moyens de fixation par le froid.

7. Procédé selon la revendication 6, **caractérisé en ce que** ledit au moins un usinage de repérage (14) et ledit au moins un relief (16) comportent chacun une surface de contact conique complémentaire à celle de l'autre.

8. Procédé selon l'une des revendications 1 à 7, **caractérisé en ce que**, pendant ladite quatrième étape (400) on effectue la séparation desdites glaces (1) d'un squelette (13) par un usinage le long dudit contour (2) effectué par un laser ou un jet d'eau, ou par un usinage en plongée si ledit contour (2) est de révolution, avec une meule boisseau (18) ou un outil cloche de profil intérieur droit, entraîné en rotation et effectuant une plongée frontale dans ladite plaque (3).

9. Procédé selon l'une des revendications 1 à 8, **caractérisé en ce que**, pendant ladite première étape (100) ou/et ladite troisième étape (300), qu'on effectue chaque usinage de saignée avec une meule qu'on rafraîchit régulièrement sur une station d'affûtage disposée à proximité immédiate de ladite plaque (3).

10. Procédé selon l'une des revendications 1 à 9, **caractérisé en ce que**, pendant ladite première étape (100) ou/et ladite troisième étape (300), on vérifie par une caméra ou d'autre moyens optiques l'état de surface de chaque chanfrein après sa réalisation, et **en ce que**, lors de dépassement d'un seuil de rugosité ou de transparence prédéfinie, on procède à un changement de meule ou d'outil, ou à un réaffûtage de meule ou d'outil sur une station d'affûtage disposée à proximité immédiate de ladite plaque (3).

11. Procédé selon l'une des revendications 1 à 10, **caractérisé en ce qu'**on réalise lesdites glaces (1) en panoplie depuis une même dite plaque (3), et **en ce qu'**on réalise, depuis une même dite plaque, des glaces (1) de contours (2) différents de façon à minimiser les chutes au niveau dudit squelette (13).

12. Procédé selon l'une des revendications 1 à 11, **caractérisé en ce que**, pendant ladite première étape (100), ou/et ladite troisième étape (300), ou/et ladite quatrième étape (400), on lubrifie avec de l'air ou/et un fluide liquide la zone de travail pour évacuer les déchets d'usinage.

13. Procédé selon l'une des revendications 1 à 12, **caractérisé en ce que**, pendant ladite première étape (100), ou/et ladite troisième étape (300), ou/et ladite quatrième étape (400), on immerge ladite plaque (3) dans un fluide liquide auquel on imprime un courant pour évacuer les déchets d'usinage.

## Patentansprüche

1. Verfahren zum Schneiden von Uhrenglas (1) entlang einer Kontur (2) aus einer Platte (3) aus transparentem Material, **dadurch gekennzeichnet, dass** nacheinander und in dieser Reihenfolge die folgenden Schritte ausgeführt werden.
- erster Schritt (100): Durchführen einer ersten Rinne (5) zumindest an der Innenseite der Kontur (2) auf einer ersten Seite (4) der Platte (3), um eine erste Fase (6) für jedes der aus der Platte (3) herzustellenden Gläser (1) zu erzeugen;
- zweiter Schritt (200): Drehen der Platte (3) und Markieren der Position der ersten Fasen (6) und/oder mindestens einer Markierungsbearbeitung (14), die während des ersten Schrittes (100) zum Herstellen der ersten Fasen (6) ausgeführt wird;
- dritter Schritt (300): Durchführen (3) gegenüber der ersten Seite (4) einer zweiten Rinne (8) zumindest an der Innenseite der Kontur (2) auf einer zweiten Seite (7) der Platte, um eine zweite Fase (9) herzustellen, die auf jede erste Rinne (5) und jede erste Fase (6) ausgerichtet ist, für jedes der aus der Platte (3) herzustellenden Gläser (1);
- vierter Schritt (400): Trennen der Gläser (1) von einem Skelett (13) der Platte (3) durch durchgehende Bearbeitung der Platte (3) auf Höhe jeder Kontur (2) jedes Glases (1), um eine Kante (11) des Glases (1) herzustellen.

2. Verfahren nach Anspruch 1, **dadurch gekennzeichnet, dass** während des ersten Schrittes (100) und/oder des dritten Schrittes (300) eine Schalenschleifscheibe (18) oder ein Glockenwerkzeug mit einem der herzustellenden Fase entsprechenden Profil verwendet wird, das rotierend angetrieben wird und frontal in die Platte (3) einsticht, wenn die Kontur (2) rotationssymmetrisch ist.

3. Verfahren nach Anspruch 1 oder 2, **dadurch gekennzeichnet, dass** während des ersten Schrittes (100) und/oder des dritten Schrittes (300) eine Schalenschleifscheibe (17) oder ein Glockenwerkzeug verwendet wird, das rotierend angetrieben wird und eine mehrachsige Konturierung der Kontur (2) ausführt, wobei sich die Drehachse der Schalenschleifscheibe oder des Glockenwerkzeugs in dem Raum senkrecht zu der Ebene erstreckt, die zu der herzustellenden Fase lokal tangential ist.

4. Verfahren nach einem der Ansprüche 1 bis 3, **dadurch gekennzeichnet, dass** während des ersten Schrittes (100) und/oder des dritten Schrittes (300) ein Ausdrehwerkzeug (19) verwendet wird, das an einem Ausdrehkopf montiert ist, der rotierend angetrieben wird und frontal in die Platte (3) einsticht, wenn die Kontur (2) rotationssymmetrisch ist.

5. Verfahren nach einem der Ansprüche 1 bis 4, **dadurch gekennzeichnet, dass** während des ersten Schrittes (100) und/oder des dritten Schrittes (300) ein Ausdrehwerkzeug (19) verwendet wird, das rotierend angetrieben wird und eine mehrachsige Konturierung der Kontur (2) ausführt, wobei sich die Drehachse eines den Ausdrehwerkzeug tragenden Ausdrehkopf s in dem Raum senkrecht zu der Ebene erstreckt, die zu der herzustellenden Fase lokal tangential ist.

6. Verfahren nach einem der Ansprüche 1 bis 5, **dadurch gekennzeichnet, dass** während des ersten Schrittes (100) mindestens eine Markierungsbearbeitung (14) ausgeführt wird und dass während des zweiten Drehschrittes (200) die Platte (3) auf einer Werkzeuganordnung (15) abgelegt wird, die mindestens ein Relief (16) aufweist, das so angeordnet ist, dass es mit der mindestens einen Markierungsbearbeitung (14) für eine Positionierung der Platte (3) in einer eindeutigen Position zusammenwirkt, und die Platte (3) auf der Werkzeuganordnung (15) durch Klemmmittel und/oder Saugmittel und/oder Kaltfixierungsmittel fixiert wird.

7. Verfahren nach Anspruch 6, **dadurch gekennzeichnet, dass** die mindestens eine Markierungsbearbeitung (14) und das mindestens eine Relief (16) jeweils eine konische Kontaktfläche aufweisen, die zu der jeweils anderen komplementär ist.

8. Verfahren nach einem der Ansprüche 1 bis 7, **dadurch gekennzeichnet, dass** während des vierten Schrittes (400) die Trennung der Gläser (1) von einem Skelett (13) durch eine Bearbeitung längs der Kontur (2) durch einen Laser oder einen Wasserstrahl oder, falls der Kontur (2) rotationssymmetrisch ist, durch eine Einstechbearbeitung mit einer Schalenschleifscheibe (18) oder einem Glockenwerkzeug mit einem geraden Innenprofil durchgeführt wird, das rotierend angetrieben wird und frontal in die Platte (3) einsticht.

9. Verfahren nach einem der Ansprüche 1 bis 8, **dadurch gekennzeichnet, dass** während des ersten Schrittes (100) und/oder des dritten Schrittes (300) jede Rinnebearbeitung mit einer Schleifscheibe ausgeführt wird, die in einer in unmittelbarer Nähe der Platte (3) angeordneten Schleifstation regelmäßig gekühlt wird.

10. Verfahren nach einem der Ansprüche 1 bis 9, **dadurch gekennzeichnet, dass** während des ersten Schrittes (100) und/oder des dritten Schrittes (300) der Oberflächenzustand jeder Fase nach ihrer Herstellung durch eine Kamera oder andere optische Mittel geprüft wird und dass bei Überschreiten eines vorab definierten Rauheits- oder Transparenz-Schwellenwerts ein Wechsel der Schleifscheibe oder des Werkzeugs oder ein erneutes Schleifen der Schleifscheibe oder des Werkzeugs in einer in unmittelbarer Nähe der Platte (3) angeordneten Schleifstation vorgenommen wird.

11. Verfahren nach einem der Ansprüche 1 bis 10, **dadurch gekennzeichnet, dass** die Gläser (1) als Sortiment aus derselben Platte (3) hergestellt werden und dass aus derselben Platte Gläser (1) mit unterschiedlichen Konturen (2) hergestellt werden, um den Verschnitt auf Höhe des Skeletts (13) zu minimieren.

12. Verfahren nach einem der Ansprüche 1 bis 11, **dadurch gekennzeichnet, dass** während des ersten Schrittes (100) und/oder des dritten Schrittes (300) und/oder des vierten Schrittes (400) der Arbeitsbereich mit Luft und/oder mit einem flüssigen Fluid geschmiert wird, um Bearbeitungsabfälle zu entfernen.

13. Verfahren nach einem der Ansprüche 1 bis 12, **dadurch gekennzeichnet, dass** während des ersten Schrittes (100) und/oder des dritten Schrittes (300) und/oder des vierten Schrittes (400) die Platte (3) in ein flüssiges Fluid getaucht wird, dem ein Strom zugeführt wird, um Bearbeitungsabfälle zu entfernen.

## Claims

1. Method for cutting a watch crystal (1) along a contour (2) in a plate (3) of transparent material, **characterized in that** the following steps are performed in succession and in the following order:
- first step (100): realizing, on a first side (4) of said plate (3), a first cut line (5) on at least the inside of said contour (2), to form a first chamfer (6), for each of said crystals (1) to be made from said plate (3);
- second step (200): turning over said plate (3) and marking the position of said first chamfers (6) and/or of at least one machined marking (14) made during said first step (100) of forming said first chamfers (6);
- third step (300): realizing on a second side (7) of said plate (3), opposite to said first side (4), a second cut line (8) on at least the inside of said contour (2), to form a second chamfer (9), in alignment with each said first cut line (5) and each said first chamfer (6), for each of said crystals (1) to be made from said plate (3);
- fourth step (400): separating said crystals (1) from a skeleton (13) of said plate (3) by machining through said plate (3) at each said contour (2) of each said crystal (1) to form an edge (11) of said crystal (1).

2. Method according to claim 1, **characterized in that**, during said first step (100) and/or said third step (300), there is used a cup grinding wheel (18) or a bell tool whose profile corresponds to the chamfer to be formed, driven in rotation and plunged straight onto said plate (3), if said contour (2) is circular.

3. Method according to claim 1 or 2, **characterized in that**, during said first step (100) and/or said third step (300), there is used a cup grinding wheel (17) or a bell tool driven in rotation and effecting multi-axis contouring along said contour (2), with the axis of rotation of said cup grinding wheel or of said bell tool moving through space perpendicularly to the plane locally tangent to the chamfer to be formed.

4. Method according to any of claims 1 to 3, **characterized in that**, during said first step (100) and/or said third step (300), there is used a shank boring tool (19) mounted on a boring head, driven in rotation and plunged straight onto said plate (3), when said contour (2) is circular.

5. Method according to any of claims 1 to 4, **characterized in that**, during said first step (100) and/or said third step (300), there is used a shank boring tool (19) driven in rotation and effecting multi-axis contouring along said contour (2), with the axis of rotation of a boring head carrying said shank boring tool moving through space perpendicularly to the plane locally tangent to the chamfer to be formed.

6. Method according to any of claims 1 to 5, **characterized in that** during said first step (100) at least one machined marking (14) is made, and **in that**, in said second, turning over step (200), said plate (3) is placed on a tool (15) including at least one relief portion (16) arranged to cooperate with said at least one machined marking (14) to position said plate (3) in a unique position, and said plate (3) is immobilised on said tool (15) by clamping means and/or suction means and/or freeze clamping means.

7. Method according to claim 6, **characterized in that** said at least one machined marking (14), and said at least one corresponding relief portion (16), each include a mutually complementary conical contact surface.

8. Method according to any of claims 1 to 7, **characterized in that**, during said fourth step (400) said crystals (1) are separated from a skeleton (13) by a machining operation along said contour (2) performed by laser or water jet cutting, or by plunge grinding if said contour (2) is circular, with a cup grinding wheel (18) or a bell tool with a straight internal profile driven in rotation and plunged straight into said plate (3).

9. Method according to any of claims 1 to 8, **characterized in that**, during said first step (100) and/or said third step (300), each cut line is machined with a cup grinding wheel which is regularly cooled in a sharpening station disposed in immediate proximity to said plate (3).

10. Method according to any of claims 1 to 9, **characterized in that**, during said first step (100) and/or said third step (300), the surface condition of each chamfer is checked by means of a camera or other optical means once said chamfer is formed, and **in that**, when a predefined roughness or transparency threshold has been breached, the cup grinding wheel or tool is changed, or the cup grinding wheel or tool is sharpened in a sharpening station disposed in immediate proximity to said plate (3).

11. Method according to any of claims 1 to 10, **characterized in that** a panoply of said crystals (1) is made from a same said plate (3), and **in that**, from a same said plate, crystals (1) with different contours (2) are made to minimise waste of material in said skeleton (13)

12. Method according to any of claims 1 to 11, **characterized in that**, during said first step (100) and/or said third step (300), and/or said fourth step (400), the work area is lubricated with air and/or a liquid fluid to evacuate machining waste.

13. Method according to any of claims 1 to 12, **characterized in that**, during said first step (100) and/or said third step (300), and/or said fourth step (400), said plate (3) is immersed in a liquid fluid to which a current is imparted to evacuate machining waste.
